# EUROPÄISCHE PATENTSCHRIFT

(11) **EP 1 297 994 B1**
(45) Veröffentlichungstag und Bekanntmachung des Hinweises auf die Patenterteilung: **04.05.2005**
(21) Anmeldenummer: 02020609.0
(22) Anmeldetag: 13.09.2002
(51) Int. Cl.: B60N 2/20

(54) **Beschlag für einen Fahrzeugsitz**
Hinge for a vehicle seat
Ferrure pour un siège de véhicule

(30) Priorität: 29.09.2001 DE 10148375
(43) Veröffentlichungstag der Anmeldung: 02.04.2003
(73) Patentinhaber: KEIPER GmbH & Co. KG, 67657 Kaiserslautern (DE)
(72) Erfinder: Klein, Mario, 78176 Blumberg (DE); Kraus, Martin, 67806 Katzenbach (DE); Nock, Eckhard, 67551 Worms (DE)
(74) Vertreter: Patentanwälte Hosenthien-Held und Dr. Held

(56) Entgegenhaltungen:
- EP-A- 0 928 717
- DE-C- 19 925 556
- FR-A- 2 799 420
- GB-A- 2 309 892
- US-A- 5 433 507

## Beschreibung

Die Erfindung betrifft einen Beschlag für einen Fahrzeugsitz mit den Merkmalen des Oberbegriffs des Anspruches 1.

Aus der EP 0 928 717 A1 ist ein Beschlag bekannt, der in den verschiedenen Sitzstellungen der Lehne durch Zusammenwirken eines Zahnkranzes am Beschlagoberteil und einer schwenkbaren Sperrklinke am Beschlagunterteil verriegelt wird. Der Zahnkranz erstreckt sich nicht so weit, daß die Sperrklinke in einer vorgeschwenkten Tischstellung der Lehne in den Zahnkranz einfallen kann. Es erfolgt statt dessen eine Abstützung einer beschlagoberteilfesten Scheibe durch ein Fühlerelement, welches zugleich die Bodenverriegelung für einen Übergang in eine Packagestellung steuert.

Um beispielsweise auch eine Verriegelung in einer Tischstellung zuzulassen, ist bei einem Beschlag der eingangs genannten Art die Scheibe als Steuerelement weiterentwickelt, welches in allen möglichen Stellungen der Lehne das Zusammenwirken der Verriegelungselemente steuert.

Der Erfindung liegt die Aufgabe zu Grunde, einen Beschlag der eingangs genannten Art weiter zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß in einem vormontierten Zustand des Beschlags das Steuerelement von außerhalb des Beschlags in den Bauraum einbringbar und an dem ihm zugeordneten Beschlagteil anbringbar ist, kann die Herstellung des Beschlags bis zum vormontierten Zustand für alle Anwendungsfälle gleich ablaufen, d.h. mit einer einheitlichen Produktionslinie. Dadurch verbilligt sich die Herstellung des Beschlags. Das zum Schluß eingebrachte Steuerelement ist dann auf den Anwendungsfall abgestimmt, d.h. vorzugsweise werden mehrere, untereinander austauschbare Steuerelemente hergestellt, die hinsichtlich der Anbringungsmöglichkeit am Beschlagteil gleich ausgebildet sind, aber sich in ihren Wirkungsflächen, beispielsweise dem Außenumfang, unterscheiden, so daß der Beschlag für verschiedene Typen von Fahrzeugsitzen einsetzbar ist. Das Steuerelement ist beispielsweise eine Steuerscheibe, welche am zweiten Beschlagteil angebracht und wenigstens teilweise um den Lehnenbolzen herum angeordnet ist, wobei das zweite Beschlagteil mittels des Lehnenbolzens relativ zum ersten Beschlagteil schwenkbar ist. Für eine formschlüssige Anlage am Lehnenbolzen ist vorzugsweise eine nach außen geöffnete Aufnahme vorgesehen, die sich in radialer Richtung vom Außenumfang der Steuerscheibe bis zu deren Mitte erstreckt. Die Steuerscheibe ist dann beispielsweise am zweiten Beschlagteil anliegend durch eine Öffnung in den Bauraum auf den Lehnenbolzen schiebbar.

Als Führungshilfe bei der Montage und zur Übertragung von Drehmomenten zwischen dem zweiten Beschlagteil und der Steuerscheibe können Absätze, Nuten oder andere Vertiefungen und mit diesen zusammenwirkende Führungserhebungen, Noppen, Butzen, Vorsprünge oder andere Erhebungen vorgesehen sein. Die drehfeste und verschiebungssichere Befestigung der Steuerscheibe am zweiten Beschlagteil erfolgt vorzugsweise mittels Befestigungsmitteln, beispielsweise Kerbnägel oder Spreiznieten, die beispielsweise durch eine Montageöffnung des ersten Beschlagteils in den Bauraum einbringbar sind.

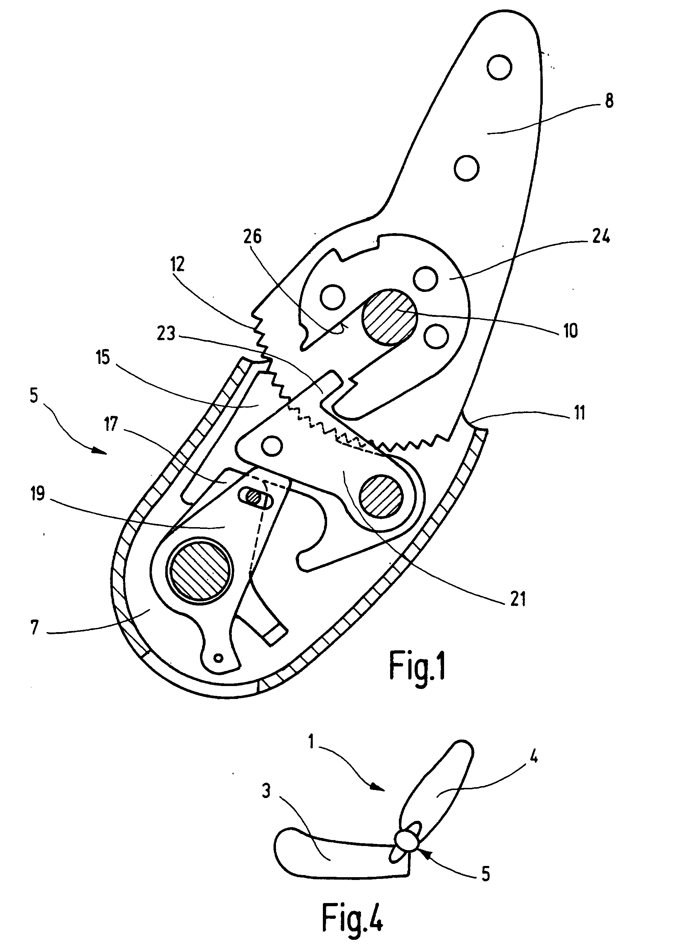

Im folgenden ist die Erfindung anhand zweier in der Zeichnung dargestellten Ausführungsbeispiele näher erläutert. Es zeigen
- Fig. 1: einen Schnitt durch das erste Ausführungsbeispiel,

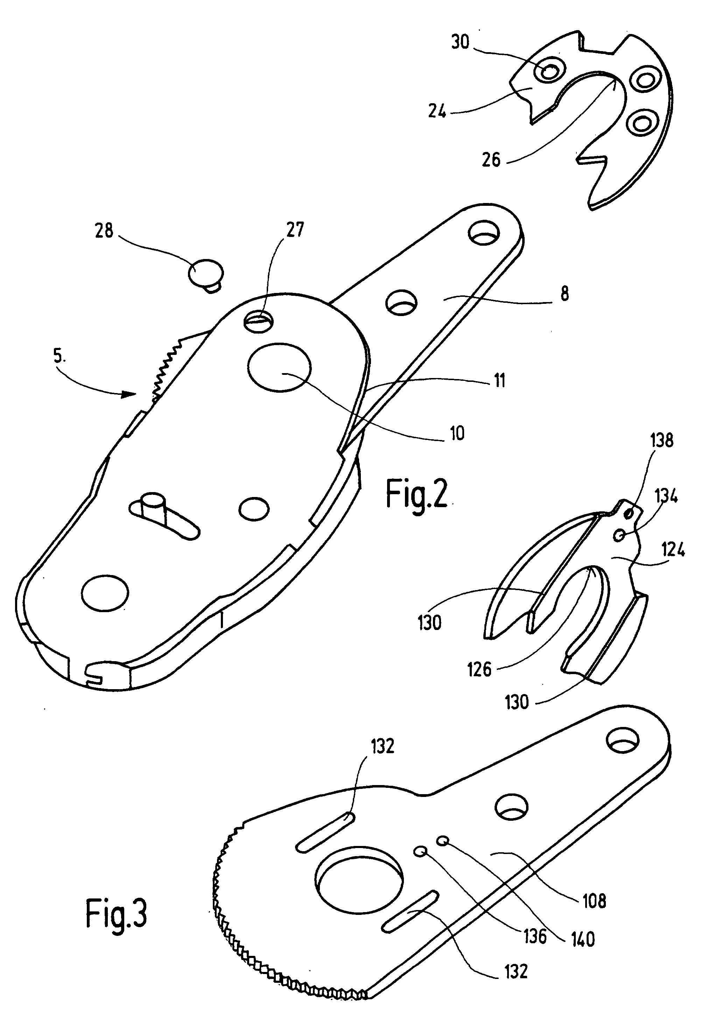

- Fig. 2: eine perspektivische Darstellung des ersten Ausführungsbeispiels vor der Montage der Steuerscheibe,
- Fig. 3: eine perspektivische Darstellung der Steuerscheibe und des Beschlagoberteils des zweiten Ausführungsbeispiels, und
- Fig. 4: eine schematische Darstellung eines Fahrzeugsitzes.

Ein Fahrzeugsitz 1 für ein Kraftfahrzeug weist ein Sitzteil 3 und eine Lehne 4 auf. Die Ausrichtung des Fahrzeugsitzes 1 im Kraftfahrzeug und dessen gewöhnliche Fahrtrichtung bestimmen die nachfolgend verwendeten Richtungsangaben. Die Lehne 4 ist auf beiden Fahrzeugsitzseiten mittels eines Beschlags 5 am Sitzteil 3 angebracht und in ihrer Neigung einstellbar.

Der Beschlag 5 gemäß dem ersten Ausführungsbeispiel weist ein sitzteilfestes Beschlagunterteil 7 und ein lehnenfestes Beschlagoberteil 8 auf, welches mittels eines Lehnenbolzens 10 relativ zum Beschlagunterteil 7 schwenkbar gelagert ist. Das Beschlagunterteil 7 besteht aus zwei flachen, länglichen, zueinander beabstandeten und am Längsrand miteinander verbundenen Teilen, welche zwischen sich einen Bauraum 7' zur Aufnahme des Beschlagoberteils 8 und verschiedener Verriegelungsund Sicherungselemente definieren. Auf der nach oben weisenden Seite ist das Beschlagunterteil 7 weitgehend offen ausgebildet, was im folgenden als Öffnung 11 bezeichnet ist. Das Beschlagoberteil 8 wird bei der Montage in diese Öffnung eingeführt.

Zur Verriegelung des Beschlags 5 ist am Beschlagoberteil 8 in dem unterhalb des Lehnenbolzens 10 angeordneten Bereich ein um den Lehnenbolzen 10 gekrümmter Zahnkranz 12 ausgebildet, welcher mit einer am Beschlagunterteil 7 schwenkbar gelagerten Sperrklinke 15 zusammenwirkt. Auf der vom Zahnkranz 12 abgewandten Seite der Sperrklinke 15 ist am Beschlagunterteil 7 ein Fangelement 17 schwenkbar gelagert, welches im Crashfall die Sperrklinke 15 abstützt. Ein ebenfalls am Beschlagunterteil 7 schwenkbar gelagertes, federbelastetes Spannelement 19, welches exzentrisch gekrümmt ausgebildet ist, sichert im Normalfall die Sperrklinke 15 in der verriegelten Stellung. Hierzu liegt das Spannelement 19 an einem Steuernocken 21 an, welcher mit der Sperrklinke 15 drehfest verbunden ist.

Der Steuernocken 21 ist zugleich mit einem Steuerfinger 23 versehen, welcher mit einer am Beschlagoberteil 8 angebrachten Steuerscheibe 24 zusammen wirkt. Die Steuerscheibe 24 ist als unterbrochener Ring ausgebildet, welcher durch eine vom Außenumfang der Steuerscheibe 24 bis in deren Mitte reichende Aufnahme 26 für den Lehnenbolzen 10 unterbrochen ist. Die Aufnahme 26 weist einen halbkreisförmig gekrümmten Grund und tangential daran anschließende, parallele Flanken auf, wobei der Abstand der Flanken der Aufnahme 26 dem Durchmesser des Lehnenbolzens 10 entspricht und im fertig montierten Zustand der Lehnenbolzen 10 in der Mitte der Steuerscheibe 24 am Grund der Aufnahme 26 angeordnet ist. Entlang ihres Außenumfangs weist die Steuerscheibe 24 Bereiche auf, welche sich in radialer Richtung unterschiedlich weit erstrecken und welche unterschiedlichen Stellungen der Lehne 4 entsprechen. In Zusammenwirkung mit dem Steuerfinger 23 wird so ein Einfallen oder Nichteinfallen der Sperrklinke 15 ermöglicht und der Schwenkbereich des Beschlagoberteils 8 begrenzt.

Die Steuerscheibe 24 ist individuell auf den Anwendungsfall abgestimmt und wird erfindungsgemäß als letztes Bauteil in den vormontierten, für alle Anwendungsfälle gleich aufgebauten Beschlag 5 eingebaut. Hierzu wird die Steuerscheibe 24 von oben her entlang dem Beschlagoberteil 8 in die Öffnung 11 des Beschlagunterteils 7 eingeführt, wobei die Aufnahme 26 über den Lehnenbolzen 10 geschoben wird, bis dieser in Anlage an den Grund der Aufnahme 26 gelangt. Im Beschlagoberteil 7 ist in geringem Abstand zum Lehnenbolzen 10 eine Montageöffnung 27 vorgesehen, durch welche nach Schwenken des Beschlagoberteils 8 nacheinander drei Kerbnägel 28 eingeführt werden können. Die Kerbnägel 28 greifen durch Bohrungen 30 der Steuerscheibe 24 und werden so in das Beschlagoberteil 8 eingebracht, daß die Steuerscheibe 24 drehfest und unverschieblich mit dem Beschlagoberteil 8 verbunden ist.

Das zweite Ausführungsbeispiel stimmt - soweit nachfolgend nicht abweichend beschrieben - mit dem ersten Ausführungsbeispiel überein, weshalb gleiche und gleichwirkende Bauteile um 100 höhere Bezugszeichen tragen. Die Steuerscheibe 124 weist auf beiden Seiten ihrer Aufnahme 126 parallel zur deren Flanken jeweils eine Nut 130 auf. Die beiden Nuten 130 dienen der Aufnahme von zwei Führungserhebungen 132, welche am Beschlagoberteil 108 angeformt sind. Die Führungserhebungen 132 dienen beim Einbau der Steuerscheibe 124 als Montageerleichterung und im Gebrauchsfall zur drehfesten Verbindung zwischen Beschlagoberteil 108 und Steuerscheibe 124. Als weitere Montagehilfe, insbesondere wenn der Lehnenbolzen erst später eingebaut wird, ist an der Steuerscheibe 124 eine Rastnoppe 134 ausgebildet, beispielsweise ausgedrückt, welche bei eingebauter Steuerscheibe 124 mit einer Rastkuhle 136 am Beschlagoberteil 108 formschlüssig zusammenwirkt.

Der Einbau der Steuerscheibe 124 erfolgt ähnlich wie im ersten Ausführungsbeispiel durch Einführen entlang dem Beschlagoberteil 108 in den vormontierten, nicht näher dargestellten Beschlag hinein, bis die Aufnahme 126 am Lehnenbolzen anliegt oder die Rastnoppe 134 in die Rastkuhle 136 gelangt. Für den axialen Zusammenhalt von Steuerscheibe 124 und Beschlagoberteil 108 ist am oberen Ende der Steuerscheibe 124 ein über das Beschlagunterteil nach oben laschenartig überstehender Bereich angeformt, in welchem eine Bohrung 138 vorgesehen ist. Ein geeignetes Befestigungsmittel, beispielsweise ein Kerbnagel, kann dann durch diese Bohrung 138 gesteckt und in das Beschlagoberteil 108 eingebracht werden, beispielsweise in eine Vertiefung 140 oder eine Sacklochbohrung.

### Bezugszeichenliste

- 1: Fahrzeugsitz
- 3: Sitzteil
- 4: Lehne
- 5: Beschlag
- 7: Beschlagunterteil, erstes Beschlagteil
- 7': Bauraum
- 8, 108: Beschlagoberteil, zweites Beschlagteil
- 10: Lehnenbolzen
- 11: Öffnung
- 12: Zahnkranz, Verriegelungselement
- 15: Sperrklinke, Verriegelungselement
- 17: Fangelement
- 19: Spannelement
- 21: Steuernocken
- 23: Steuerfinger
- 24, 124: Steuerscheibe, Steuerelement
- 26, 126: Aufnahme
- 27: Montageöffnung
- 28: Kerbnagel, Befestigungsmittel
- 30, 138: Bohrung
- 130: Nut
- 132: Führungserhebung
- 134: Rastnoppe
- 136: Rastkuhle
- 140: Vertiefung

## Patentansprüche

1. Beschlag für einen Fahrzeugsitz, insbesondere für einen Kraftfahrzeugsitz, mit einem ersten Beschlagteil (7), welches einen zumindest teilweise geschlossenen Bauraum (7') definiert, einem relativ zum ersten Beschlagteil (7) schwenkbaren zweiten Beschlagteil (8; 108), zwei zwischen den Beschlagteilen (7, 8; 108) wirksamen Verriegelungselementen (12, 15) und einem dem einen Beschlagteil (8; 108) zugeordnetes und innerhalb des Bauraumes (7') angeordneten Steuerelement (24; 124) zur Steuerung des Zusammenwirkens zwischen den Verriegelungselementen (12, 15), **dadurch gekennzeichnet, daß** in einem vormontierten Zustand des Beschlags (5) das Steuerelement (24; 124) von außerhalb des Beschlags (5) in den Bauraum (7') einbringbar und an dem ihm zugeordneten Beschlagteil (8; 108) anbringbar ist.

2. Beschlag nach Anspruch 1, **dadurch gekennzeichnet, daß** als Steuerelement eine am zweiten Beschlagteil (8; 108) anbringbare Steuerscheibe (24; 124) vorgesehen ist, die wenigstens teilweise um den Lehnenbolzen (10) herum angeordnet ist, mittels dessen das zweite Beschlagteil (8; 108) relativ zum ersten Beschlagteil (7) schwenkbar ist.

3. Beschlag nach Anspruch 2, **dadurch gekennzeichnet, daß** die Steuerscheibe (24; 124) eine nach außen geöffnete Aufnahme (26; 126) für den Lehnenbolzen (10) aufweist.

4. Beschlag nach Anspruch 3, **dadurch gekennzeichnet, daß** die Aufnahme (26; 126) sich in radialer Richtung vom Außenumfang der Steuerscheibe (24; 124) bis zu deren Mitte erstreckt.

5. Beschlag nach einem der Ansprüche 2 bis 4, **dadurch gekennzeichnet, daß** die Steuerscheibe (24; 124) am zweiten Beschlagteil (8; 108) anliegend auf den Lehnenbolzen (10) schiebbar ist.

6. Beschlag nach einem der Ansprüche 2 bis 5, **dadurch gekennzeichnet, daß** zwischen der Steuerscheibe (124) und dem zweiten Beschlagteil (108) Vertiefungen (130, 136) und Erhebungen (132, 134) vorgesehen sind, welche zur Führung und/oder Sicherung der Steuerscheibe (124) bei der Montage zusammenwirken.

7. Beschlag nach einem der Ansprüche 2 bis 6, **dadurch gekennzeichnet, daß** nach dem Aufschieben auf den Lehnenbolzen (10) die Steuerscheibe (24; 124) mittels Befestigungsmitteln (28) am zweiten Beschlagteil (8; 108) anbringbar ist.

8. Beschlag nach Anspruch 7, **dadurch gekennzeichnet, daß** das erste Beschlagteil (5) eine Montageöffnung (27) aufweist, durch welche die Befestigungsmittel (28) einbringbar sind.

9. Beschlag nach einem der Ansprüche 2 bis 8, **dadurch gekennzeichnet, daß** die Steuerscheibe (24; 124) gegen eine gleichartige Steuerscheibe (24; 124) mit einer anderen Struktur entlang ihres Außenumfangs austauschbar ist.

10. Fahrzeugsitz mit einem Sitzteil (3) und einer Lehne (4), **gekennzeichnet durch** einen Beschlag (5) nach einem der Ansprüche 1 bis 9 zur Neigungseinstellung der Lehne (4).

## Claims

1. A fitting for a vehicle seat, in particular for a motor vehicle seat, having a first fitting part (7) which defines an at least partially closed structural space (7'), a second fitting part (8; 108) which can be pivoted relative to the first fitting part (7), two locking elements (12, 15) which are effective between the fitting parts (7, 8; 108), and a control element (24; 124) which is assigned to the one fitting part (8; 108) and is arranged within the structural space (7'), for controlling the interaction between the locking elements (12, 15), wherein, in a pre-assembled state of the fitting (5), the control element (24; 124) can be placed from outside the fitting (5) into the structural space (7') and can be attached to the fitting part (8; 108) assigned to it.

2. The fitting as claimed in claim 1, wherein a control plate (24; 124) which can be attached to the second fitting part (8; 108) is provided as control element, said control plate being arranged at least partially around the backrest bolt (10), by means of which the second fitting part (8; 108) can be pivoted relative to the first fitting part (7).

3. The fitting as claimed in claim 2, wherein the control plate (24; 124) has an outwardly open socket (26; 126) for the backrest bolt (10).

4. The fitting as claimed in claim 3, wherein the socket (26; 126) extends in the radial direction from the outer circumference of the control plate (24; 124) as far as its center.

5. The fitting as claimed in one of claims 2 to 4, wherein the control plate (24; 124) can be pushed onto the backrest bolt (10) adjacent to the second fitting part (8; 108).

6. The fitting as claimed in one of claims 2 to 5, wherein depressions (130, 136) and elevations (132, 134) are provided between the control plate (124) and the second fitting part (108) and interact for guiding and/or securing the control plate (124) during installation.

7. The fitting as claimed in one of claims 2 to 6, wherein after being pushed onto the backrest bolt (10) the control plate (24; 124) can be attached to the second fitting part (8; 108) by means of fastening means (28).

8. The fitting as claimed in claim 7, wherein the first fitting part (5) has an installation opening (27) through which the fastening means (28) can be placed.

9. The fitting as claimed in one of claims 2 to 8, wherein the control plate (24; 124) can be exchanged for a similar control plate (24; 124) having a different structure along its outer circumference.

10. A vehicle seat having a seat part (3) and a backrest (4), comprising a fitting (5) as claimed in one of claims 1 to 9 for adjusting the inclination of the backrest (4).

## Revendications

1. Armature pour un siège de véhicule, notamment pour un siège de véhicule automobile, comprenant un premier élément d'armature (7), définissant un espace de construction (7') au moins partiellement clos, un second élément d'armature (8 ; 108) pivotant relativement au premier élément d'armature (7), deux éléments de verrouillage (12, 15) actifs entre les éléments d'armature (7, 8 ; 108) et un élément de commande (24 ; 124) associé à l'un des éléments d'armature (8 ; 108) et disposé à l'intérieur de l'espace de construction (7') pour la commande de la coopération entre les éléments de verrouillage (12, 15), **caractérisée par le fait que**, lorsque l'armature (5) est dans un état de pré-assemblage, l'élément de commande (24 ; 124) peut être inséré dans l'espace de construction (7') de l'extérieur de l'armature (5) et monté sur l'élément d'armature (8 ; 108) qui lui est associé.

2. Armature selon la revendication 1, **caractérisée par le fait qu'**en tant qu'élément de commande est prévue une came de commande (24 ; 124) pouvant être montée sur le second élément d'armature (8 ; 108) et étant disposée au moins partiellement autour du boulon du dossier (10), à l'aide duquel le second élément d'armature (8 ; 108) pivote relativement au premier élément d'armature (7).

3. Armature selon la revendication 2, **caractérisée par le fait que** la came de commande (24 ; 124) est munie d'un logement (26 ; 126) ouvert vers l'extérieur pour le boulon de dossier (10).

4. Armature selon la revendication 3, **caractérisée par le fait que** le logement (26 ; 126) s'étend radialement, de la périphérie extérieure de la came de commande (24 ; 124), jusqu'au centre.

5. Armature selon l'une quelconque des revendications 2 à 4, **caractérisée par le fait que** la came de commande (24 ; 124) adjacente au second élément d'armature (8 ; 108) peut être poussée sur le boulon de dossier (10).

6. Armature selon l'une quelconque des revendications 2 à 5, **caractérisée par le fait que** des creux (130 ; 136) et des bosses (132, 134) qui coopèrent pour le guidage et/ou pour la sécurisation de la came de commande (124) lors du montage sont prévus entre la came de commande (124) et le second élément d'armature (108).

7. Armature selon l'une quelconque des revendications 2 à 6, **caractérisée par le fait qu'**après avoir été poussée sur le boulon de dossier (10), la came de commande (24 ; 124) peut être appliquée sur le second élément d'armature (8 ; 108) à l'aide de dispositifs de fixation (28).

8. Armature selon la revendication 7, **caractérisée par le fait que** le premier élément d'armature (5) est muni d'un orifice de montage (27), à travers lequel les dispositifs de fixation (28) peuvent être insérés.

9. Armature selon l'une quelconque des revendications 2 à 8, **caractérisée par le fait que** la came de commande (24 ; 124) peut être remplacée par une came de commande de type identique (24 ; 124), présentant une structure différente le long de sa périphérie extérieure.

10. Siège de véhicule, avec une partie d'assise (3) et un dossier (4), **caractérisé par** une armature (5) telle que définie à l'une quelconque des revendications 1 à 9, pour le réglage de l'inclinaison du dossier (4).
